Europäisches Patentamt

European Patent Office

Office européen des brevets

(19)

(11) **EP 0 983 445 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: **97910350.4**

(22) Anmeldetag: **24.09.1997**

(51) Int Cl.$^7$: **F16B 37/12**

(86) Internationale Anmeldenummer:
**PCT/EP97/05250**

(87) Internationale Veröffentlichungsnummer:
**WO 98/13609 (02.04.1998 Gazette 1998/13)**

(54) **DRAHTGEWINDEEINSATZ IN KOMBINATION MIT EINER GEWINDEBOHRUNG EINES WERKSTÜCKES**

THREADED INSERT MADE OF WIRE COMBINED WITH A THREADED HOLE IN A WORKPIECE

INSERT FILETE EN FIL METALLIQUE COMBINE AVEC LE TROU TARAUDE D'UNE PIECE

(84) Benannte Vertragsstaaten:
**AT BE CH DE ES FR GB IT LI SE**

(30) Priorität: **25.09.1996 DE 19639416**
**12.09.1997 DE 19740167**

(43) Veröffentlichungstag der Anmeldung:
**08.03.2000 Patentblatt 2000/10**

(73) Patentinhaber: **Böllhoff GmbH**
**33649 Bielefeld (DE)**

(72) Erfinder: **KOBUSCH, Klaus**
**D-33613 Bielefeld (DE)**

(74) Vertreter: **Wehnert, Werner, Dipl.-Ing.**
**Patentanwälte Hauck, Graalfs, Wehnert, Döring, Siemons et al**
**Mozartstrasse 23**
**80336 München (DE)**

(56) Entgegenhaltungen:
**EP-A- 0 228 981       US-A- 2 152 681**
**US-A- 2 363 663       US-A- 2 371 674**

**Beschreibung**

Die Erfindung betrifft einen Drahtgewindeeinsatz in Kombination mit einer Gewindebohrung eines Werkstükkes, bestehend aus einem zylindrischen Körper mit mehreren schraubenförmig gewickelten Windungen und einer Endwindung, die ausgehend vom Außendurchmesser des zylindrischen Körpers radial nach innen verläuft.

Solche Drahtgewindeeinsätze sind bekannt, z.B. aus US-A-2,363,789, EP-A-140 812 und EP-A-157 715. Regelmäßig muß der Außendurchmesser des zylindrischen Körpers etwas größer als der Außendurchmesser des Aufnahmegewindes im Werkstück gewählt werden, so daß der Einbau des Einsatzes in die Gewindebohrung des Werkstückes unter einer Durchmesserverringerung der Drahtwendel erfolgen muß und auf diese Weise dann durch die elastische Rückverformung der Drahtwendel ein fester Sitz in der Gewindebohrung erzielt wird. Um das Einschrauben des Drahtgewindeeinsatzes in die Gewindebohrung zu erleichtern wird in bekannter Weise (EP-B1-0 228 981) eine halbe Windung am Ende des zylindrischen Körpers radial nach innen eingezogen. Der kleinste Außendurchmesser des eingezogenen Abschnitts soll etwa gleich oder etwas größer als der zugehörige Außendurchmesser der Gewindebohrung sein. Ferner ist bei diesem bekannten Drahtgewindeeinsatz der Drahtquerschnitt am Ende in bestimmter Weise verringert, um das Einschrauben zu erleichtern und Beschädigungen der Gewindebohrung zu vermeiden. Nach US 2,152,681 ist der Außendurchmesser des eingezogenen Endabschnitts etwas geringer als der Außendurchmesser des Aufnahmegewindes. Der Umfangswinkel des eingezogenen Abschnitts beträgt wiederum 180°. Ein ähnlicher Drahtgewindeeinsatz ist aus der US 2,371,674 bekannt, bei dem, wie sich Fig. 1 und 2 dieses Dokumentes entnehmen läßt, die Endwindung anschließend an die über einen kleinen Winkelbereich verlaufende Durchmesserverringerung um einen Umfangswinkel von etwas mehr als 180° verläuft.

Trotzdem ist es bei den bekannten Drahtgewindeeinsätzen erforderlich, daß zum Einschrauben ein Spezialwerkzeug in Form einer Vorspannpatrone und einer Spindel verwendet wird, in die zunächst der Drahtgewindeeinsatz eingesetzt wird, um vor dem Einschrauben in die Gewindebohrung den Durchmesser des Einsatzes zu verringern. Ein solches Einbauwerkzeug ist beispielsweise in US-A-4,553,302 erläutert. Man kann zwar den Außendurchmesser verringern, um das Einschrauben zu erleichtern; dies zeigt beispielsweise die US-A-2,363,663. Der in Fig. 3 dieses Dokuments dargestellte Gewindeeinsatz besitzt einen durchmesserverringerten Endabschnitt, welcher sich über ungefähr vier Windungen (ca. 1440°) erstreckt. Hierbei ist der Außendurchmesser des durchmesserverringerten Endabschnittes deutlich kleiner gewählt als der Außendurchmesser der Gewindebohrung, um den Sitz zwischen dem Gewindeeinsatz und der vom Gewindeeinsatz aufgenommenen Schraube zu verstärken. Die Folge ist jedoch, daß der Festsitz zwischen dem Gewindeeinsatz und der Bohrung gefährdet ist, wobei auch einschlägige Vorschriften ggf. nicht eingehalten werden.

Der Erfindung liegt die Aufgabe zugrunde, den Drahtgewindeeinsatz so auszubilden, daß der Einbau in die Gewindebohrung erleichtert ist und insbesondere ohne ein Werkzeug erfolgen kann, das vor dem Einbau den Durchmesser des Drahtgewindeeinsatzes verkleinert.

Die Aufgabe ist erfindungsgemäß mit den Merkmalen des Patentanspruchs 1 gelöst. Vorteilhafte Weiterbildungen ergeben sich aus den Unteransprüchen.

Im Gegensatz zu bekannten Drahtgewindeeinsätzen ist so eine Einführzone geschaffen, die sich aus der Endwindung (verringerter konstanter Außendurchmesser) und dem Abschnitt der Durchmesserverringerung zusammensetzt und die insgesamt über einen Umfangswinkel von 360° bis 720° verläuft. Schon bei einem Umfangswinkel von etwa 360° ist der Einbau ganz wesentlich erleichtert und kann vor allem auf die sogenannte Vorspannpatrone verzichtet werden, die den Drahtgewindeeinsatz vor dem Einbau auf einen kleineren Außendurchmesser bringt. So läßt sich das Einbauwerkzeug wesentlich vereinfachen. Die Endwindung mit dem verringerten und konstanten Außendurchmesser liegt konzentrisch zu dem zylindrischen Körper, so daß beim Aufsetzen auf das Einbauwerkzeug der Drahtgewindeeinsatz nicht verkantet, sondern vielmehr konzentrisch ausgerichtet ist. Damit ist das Einsetzen in das Aufnahmegewinde des Werkstückes erleichtert. Im übrigen besitzt die Endwindung ein geringes Übermaß, vorzugsweise von 0,1 mm, um das der verringerte Außendurchmesser der Endwindung größer ist als der Außendurchmesser des Aufnahmegewindes. So ist auch ein Einführen der Endwindung von Hand in das Aufnahmegewinde möglich. Das Übermaß der Endwindung stellt aber sicher, daß die Endwindung keinesfalls radial nach innen vorsteht und dann beim Einsetzen der Schraube hinderlich wäre.

Nach dem Einsetzen des zylindrischen Körpers in das Aufnahmegewinde erfolgt das weitere Eindrehen mit einem einfachen Werkzeug unter Verringerung des Außendurchmessers des zylindrischen Körpers. Das Werkzeug kann beispielsweise ein größenmäßig abgestimmter Schraubendreher sein. Zum Ansetzen des Werkzeuges ist in bekannter Weise der Drahtgewindeeinsatz entweder mit einem Zapfen versehen, der nach dem Einbau abgeschlagen und ggf. entfernt wird, oder das Werkzeug greift mit einer Nase in eine Kerbe der Endwindung. Die erfindungsgemäß ausgebildete Einführzone ist vorzugsweise an jedem Ende des Drahtgewindeeinsatzes vorgesehen, so daß beim Einbau ein Ausrichten des Einsatzes entfallen kann, das dann nötig ist, wenn nur ein Ende des Einsatzes erfindungsgemäß ausgebildet ist.

Die Nennlänge des Gewindeeinsatzes vor dem Einbau ist in bekannter Weise etwas kürzer als nach dem Einbau in das Aufnahmegewinde. So ergeben sich vor der Montage Steigungswinkel des Drahtgewindeeinsatzes, die kleiner sind als im montierten Zustand. Bei sehr kleinen Steigungswinkeln des Drahtgewindeeinsatzes ist erfindungsgemäß vorgesehen, daß die Einführzone über einen Umfangswinkel von 360° bis 720° verläuft. Vorzugsweise wird zwischen der Endwindung und der Drahtwendel eine volle Zwischenwindung vorgesehen, deren Außendurchmesser zwischen dem konstanten Durchmesser der Endwindung und dem Durchmesser des zylindrischen Körpers liegt. Damit findet die Endwindung am Einbauwerkzeug eine Abstützung und kann nicht radial nach innen wandern und ggf. nach innen in den Drahtgewindeeinsatz eintreten..

Ein Ausführungsbeispiel der Erfindung ist nachstehend anhand der Zeichnung erläutert. Es zeigt:

Fig. 1          eine Draufsicht auf einen Drahtgewindeeinsatz mit Zapfen,

Fig. 2          einen Längsschnitt durch den Drahtgewindeeinsatz der Fig. 1,

Fig. 3 und 6    einen Schnitt der Gewindebohrung im Werkstück,

Fig. 4          eine Draufsicht auf einen Drahtgewindeeinsatz mit Mitnehmerkerbe, und

Fig. 5          einen Längsschnitt im vergrößerten Maßstab durch eine Einführzone am Ende des Drahtgewindeeinsatzes mit einer Zwischenwindung.

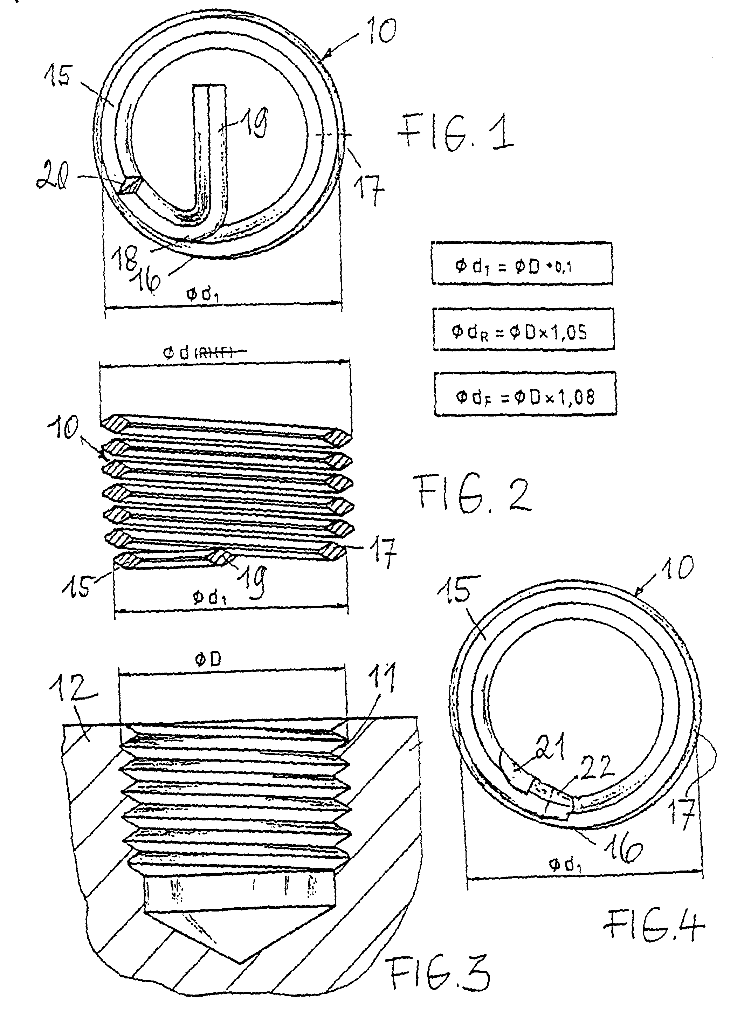

Der in Fig. 1 und 2 dargestellte Drahtgewindeeinsatz 10 soll in eine Gewindebohrung 11 vom Außendurchmesser D in einem Werkstück 12 gemäß Fig. 3 eingeschraubt werden.

Der Drahtgewindeeinsatz 10 besteht aus mehreren einzelnen Windungen, die zu einem zylindrischen Körper gewickelt sind, der einen Außendurchmesser d aufweist, der um ein vorgegebenes Maß größer als der Gewindedurchmesser D ist und davon abhängt, ob es sich um ein Gewinde mit Regelsteigung R oder mit Feinsteigung F handelt. Bei Regelsteigung des Gewindes ist der Außendurchmesser des Gewindeeinsatzes $d_R$ gleich dem Außendurchmesser D des Aufnahmegewindes mal dem Faktor 1,05. Bei einem Gewinde mit Feinsteigung ist der Außendurchmesser $d_F$ des Gewindeeinsatzes 10 gleich dem Außendurchmesser D mal dem Faktor 1,08.

In den Fig. 1 bis 4 ist außerdem eine Einführzone dargestellt, die sich um eine volle Umdrehung von etwa 360° erstreckt, also über mehr als 180° einen kleineren Außendurchmesser $d_1$ aufweist. Dies ist insbesondere aus der Stirnansicht der Fig. 1 erkennbar, wonach sich an eine Durchmesserverringerung zwischen 16 und 17 die Endwindung 15 anschließt und so die Einführzone über eine ganze Umdrehung, also um etwa 360° hinweg erfolgt. Ausgehend vom Außendurchmesser d des zylindrischen Körpers bei 16 ist die Einführzone radial nach innen gekrümmt, bis nach einem Umfangswinkel von etwa 90° an der Stelle 17 der verringerte Außendurchmesser $d_1$ der Endwindung 15 erreicht ist. Anschließend bleibt dann der verringerte Außendurchmesser $d_1$ über mehr als 180° Umfangswinkel konstant, vorzugsweise über etwa 270°, so daß sich eine Einführzone von etwa 360° ergibt. Damit ist das Einführen in die Aufnahmebohrung erleichtert und der Drahtgewindeeinsatz bleibt konzentrisch ausgerichtet. Dabei ist der Außendurchmesser $d_1$ gleich dem Außendurchmesser D + 0,1 mm.

Im Bereich zwischen der Sollbruchstelle 20 und dem Ende 18 der Endwindung 15, wo die Endwindung bogenförmig in den radialen Teil des Zapfens 19 übergeht, ist der Außendurchmesser noch weiter verringert, so daß sich ein Übergang zum radialen Teil des Zapfens 19 ergibt. Diese weitere Durchmesserverringerung ist später beim Einschrauben einer Schraube in die mit dem Drahtgewindeeinsatz ausgekleidete Gewindebohrung 11 nicht hinderlich, weil der Zapfen 19 bis zur Sollbruchstelle 20 abgeschlagen wird.

Fig. 4 zeigt einen Drahtgewindeeinsatz, der in bekannter Weise mit einer Mitnehmerkerbe 21 versehen ist, in welche eine Klinke an einem nicht dargestellten Einbauwerkzeug greifen kann, um den Einsatz in die Gewindebohrung einzudrehen. Das vordere Ende 22 der Endwindung 15 verläuft leicht konisch, wie dies bekannt ist. Ansonsten ist die Endwindung 15 und die Durchmesserverringerung 16, 17 von insgesamt etwa 360° in der anhand der Fig. 1 erläuterten Weise ausgebildet, so daß der Gewindeeinsatz ebenfalls von Hand in die Gewindebohrung durch Drehen einführbar ist, bis der dem Einführende diametral gegenüberliegende Abschnitt der Endwindung 15 sich an der Gewindebohrung im Werkstück abstützt und damit der Einsatz in die Gewindebohrung eingeführt ist, worauf das weitere Eindrehen mit einem passenden Werkzeug erfolgt, das in die Kerbe 21 greift.

Auch wenn dies in der Zeichnung nicht dargestellt ist, kann natürlich auch das andere Ende des zylindrischen Körpers mit einer gleich ausgebildeten Endwindung 15 versehen sein.

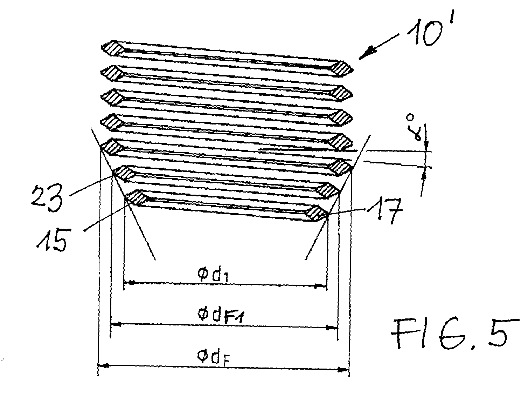

Fig. 5 zeigt im Schnitt ein Ende eines Drahtgewindeeinsatzes 10' mit einer Einführzone, die aus einer Endwindung 15 mit dem Außendurchmesser $d_1$ und einer Zwischenwindung 23 mit dem Außendurchmesser $d_{F1}$ bei einem Gewinde mit Feinsteigung F besteht. Die Drahtwendel hat den Außendurchmesser $d_F$. Ferner ist der Steigungswinkel α der Windungen im nicht eingebauten Zustand angegeben. Die Zwischenwindung 23 kann ebenfalls eine volle Windung von etwa 360° sein, so daß sich insgesamt der Umfangswinkel für Einführzone mit Endwindung 15 und Zwischenwindung 23 zu etwa 720° entsprechend einer Endwindung 15 mit etwa 270° zuzüglich der Durchmesserverringerung über die Zwischenwindung 23 hinweg von etwa 450° ergibt, wie dies in Fig. 5 dargestellt ist. Damit können sich die Windungen der Einführzone beim Einbau in jedem Fall aufeinander abstützen. Es ergibt sich folgende Zuordnung für Regel- und Feingewinde: Außendurchmesser $d_1$ der Endwindung = D des Aufnahmegewindes + 0,1 mm

Für Feingewinde gilt:

$$\text{Außendurchmesser } d_{F1} \text{ der Zwischenwindung 23} = D \times 1{,}05$$

$$\text{Außendurchmesser } d_F \text{ des zylindrischen Körpers} = D \times 1{,}08.$$

Ist eine Zwischenwindung 23 auch bei einem Gewinde mit Regelsteigung notwendig, so gilt:

$$\text{Außendurchmesser } d_{R1} \text{ der Zwischenwindung 23} = D \times 1{,}03$$

$$\text{Außendurchmesser } d_R \text{ des zylindrischen Körpers} = D \times 1{,}05$$

**Patentansprüche**

1. Drahtgewindeeinsatz (10) in Kombination mit einer Gewindebohrung (11) eines Werkstückes (12), bestehend aus einem zylindrischen Körper mit mehreren schraubenförmig gewickelten Windungen und einer Endwindung (15), die ausgehend vom Außendurchmesser des zylindrischen Körpers radial nach innen verläuft, und mit einem Mitnehmer (19;21) an der Endwindung (15) zum Ansetzen eines Werkzeuges zum Einschrauben des Drahtgewindeeinsatzes (10) in die Gewindebohrung (11), wobei anschließend an die Durchmesserverringerung (16,17) die Endwindung (15) über einen Umfangswinkel von mindestens 180° mit dem verringerten und konstanten Außendurchmesser ($d_1$) verläuft **dadurch gekennzeichnet, daß** die Durchmesserverringerung (16, 17) und der verringerte konstante Außendurchmesser ($d_1$) der Endwindung (15) sich insgesamt über einen Umfangswinkel von 360° bis 720° erstrecken und der verringerte konstante Außendurchmesser ($d_1$) der Endwindung (15) um ein das Einführen der Endwindung von Hand in die Gewindebohrung ermöglichendes vorgegebenes Maß größer als der Außendurchmesser (D) der Gewindebohrung ist.

2. Drahtgewindeeinsatz nach Anspruch 1, **dadurch gekennzeichnet, daß** die Endwindung (15) mit dem konstanten verringerten Außendurchmesser ($d_1$) über einen Umfangswinkel von 270° und die Durchmesserverringerung (16,17) über einen Umfangswinkel von 450° verläuft, so daß zwischen der Endwindung (15) und dem zylindrischen Körper eine Zwischenwindung (23) vorhanden ist.

3. Drahtgewindeeinsatz nach Anspruch 1 oder 2, **dadurch gekennzeichnet, daß** der Außendurchmesser ($d_R$) der Windungen des zylindrischen Körpers für eine Regelsteigung (R) des Gewindes gleich dem Außendurchmesser (D) der Gewindebohrung multipliziert mit dem Faktor 1,05 ist.

4. Drahtgewindeeinsatz nach Anspruch 1 oder 2, **dadurch gekennzeichnet, daß** der Außendurchmesser ($d_F$) der Windungen des zylindrischen Körpers für eine Feinsteigung (F) des Gewindes gleich dem Außendurchmesser (D) der Gewindebohrung multipliziert mit dem Faktor 1,08 ist.

5. Drahtgewindeeinsatz nach Anspruch 2 und 3, **dadurch gekennzeichnet, daß** der Außendurchmesser ($d_{R1}$) der Zwischenwindung (23) für eine Regelsteigung (R) des Gewindes gleich dem Außendurchmesser (D) der Gewindebohrung multipliziert mit dem Faktor 1,03 ist.

6. Drahtgewindeeinsatz nach Anspruch 2 und 4, **dadurch gekennzeichnet, daß** der Außendurchmesser ($d_{F1}$) der Zwischenwindung (23) für eine Feinsteigung (F) des Gewindes gleich dem Außendurchmesser (D) der Gewindebohrung multipliziert mit dem Faktor 1,05 ist.

7. Drahtgewindeeinsatz nach einem der vorhergehenden Ansprüche, **dadurch gekennzeichnet, daß** der verringerte konstante Außendurchmesser ($d_1$) der Endwindung (15) gleich dem Außendurchmesser (D) der Gewindebohrung (11) plus 0,1 mm beträgt.

**EP 0 983 445 B1**

### Claims

1. A wire-type screw thread insert (10) combined with a tapped hole (11) of a workpiece (12) consisting of a cylindrical member with a plurality of helically wound windings and a terminal winding (15) which extends radially inwards from an outer diameter of the cylindrical member, and with a tang (19; 21) at the terminal winding (15) for engagement of a tool to thread the wire-type screw thread insert (10) into the taped hole (11), the terminal winding (15) extending from the diameter reduction (16, 17) about an angle of at least 180° with the reduced and constant outer diameter ($d_1$), **characterized in that** the diameter reduction (16, 17) and the reduced constant outer diameter (dl) of the terminal winding (15) extend altogether about an angle of 360° to 720° and the reduced constant outer diameter ($d_1$) of the terminal winding (15) exceeds the outer diameter (D) of the tapped hole for a predetermined amount so as to allow for manual insertion of the terminal winding.

2. The wire type screw thread insert of claim 1 **characterized in that** the terminal winding (15) with the constant reduced outer diameter ($d_1$) extends about an angle of 270° and the diameter reduction (16, 17) extends about an angle of 450° such that an intermediate winding (23) is present between the terminal winding (15) and the cylindrical member.

3. The wire type screw thread insert of claim 1 or claim 2 **characterized in that** the outer diameter ($d_R$) of the windings of the cylindrical member for a standard pitch R of the screw thread equals the outer diameter (D) of the tapped hole multiplied by the factor 1.05.

4. The wire type screw thread insert of claim 1 or claim 2 **characterized in that** the outer diameter ($d_F$) of the windings of the cylindrical member for a fine pitch (F) of the screw threads equals the outer diameter (D) of the tapped hole multiplied by the factor 1.08.

5. The wire type screw thread insert of claims 2 and 3 **characterized in that** the outer diameter ($d_{R1}$) of the intermediate winding (23) for a standard pitch (R) of the screw threads equals the outer diameter (D) of the tapped hole multiplied by the factor 1.03.

6. The wire type screw thread insert of claims 2 and 4 **characterized in that** the outer diameter ($d_{F1}$) of the intermediate winding (23) for a fine pitch (F) of the screw threads equals the outer diameter (D) of the tapped hole multiplied by the factor (1.05).

7. The wire type screw thread insert of any of the preceding claims **characterized in that** the reduced constant outer diameter ($d_1$) of the terminal winding (15) equals the outer diameter (D) of the tapped hole (11) plus 0.1 mm.


### Revendications

1. Insert de filetage en fil métallique (10), en combinaison avec un alésage fileté (11) d'une pièce à travailler (12), constitué d'un corps cylindrique comportant plusieurs spires enroulées en hélice et une spire d'extrémité (15) qui se prolonge radialement vers l'intérieur en partant du diamètre extérieur du corps cylindrique, et comportant un dispositif d'entraînement (19; 21) sur la spire d'extrémité (15) pour y adapter un outil pour visser l'insert de filetage en fil métallique (10) dans l'alésage fileté (11), tandis que la spire. d'extrémité (15), se raccordant à la zone de diamètre réduit (16, 17), s'étend suivant un angle périphérique d'au moins 180°, avec le diamètre extérieur réduit et constant ($d_1$),
   **caractérisé en ce que** la zone de diamètre réduit (16, 17) et le diamètre extérieur réduit et constant ($d_1$) de la spire d'extrémité (15) s'étendent au total sur un angle périphérique de 360° à 720°, et **en ce que** le diamètre extérieur réduit et constant (d1) de la spire d'extrémité (15) est plus grand que le diamètre extérieur (D) de l'alésage fileté, d'une grandeur prédéfinie permettant l'introduction manuelle de la spire d'extrémité dans l'alésage fileté.

2. Insert de filetage en fil métallique suivant la revendication 1, **caractérisé en ce que** la spire d'extrémité (15) comportant le diamètre extérieur réduit et constant (d1) s'étend suivant un angle périphérique de 270°, et **en ce que** la zone de diamètre réduit (16, 17) (15) s'étend sur un angle périphérique de 450°, de telle façon qu'entre la spire d'extrémité (15) et le corps cylindrique, il existe une spire intermédiaire (23).

3. Insert de filetage en fil métallique suivant la revendication 1 ou 2, **caractérisé en ce que** le diamètre extérieur ($d_R$) des spires du corps cylindrique, pour un pas gros (R) du filetage, est égal au diamètre extérieur (D) de l'alésage

5

fileté, multiplié par le facteur 1,05.

4. Insert de filetage en fil métallique suivant la revendication 1 ou 2, **caractérisé en ce que** le diamètre extérieur ($d_F$) des spires du corps cylindrique, pour un pas fin (F) du filetage, est égal au diamètre extérieur (D) de l'alésage fileté, multiplié par le facteur 1,08.

5. Insert de filetage en fil métallique suivant les revendications 2 et 3, **caractérisé en ce que** le diamètre extérieur ($d_{R1}$) de la spire intermédiaire (23), pour un pas gros (R) du filetage, est égal au diamètre extérieur (D) de l'alésage fileté, multiplié par le facteur 1,03.

6. Insert de filetage en fil métallique suivant les revendications 2 et 4, **caractérisé en ce que** le diamètre extérieur ($d_{F1}$) de la spire intermédiaire (23), pour un pas fin (F) du filetage, est égal au diamètre extérieur (D) de l'alésage fileté, multiplié par le facteur 1,05.

7. Insert de filetage en fil métallique suivant l'une des revendications précédentes, **caractérisé en ce que** le diamètre extérieur réduit et constant (d1) de la spire d'extrémité (15) est égal au diamètre extérieur (D) de l'alésage fileté (11), plus 0,1 mm.

FIG. 1

$$\phi d_1 = \phi D \cdot 0,1$$

$$\phi d_R = \phi D \times 1,05$$

$$\phi d_F = \phi D \times 1,08$$

FIG. 2

FIG. 3

FIG.4

FIG. 5